Europäisches Patentamt

**European Patent Office**

**Office européen des brevets**

(19)

(11) Numéro de publication : **0 176 427**
**B1**

(12)
# FASCICULE DE BREVET EUROPÉEN

(45) Date de publication du fascicule du brevet :
**23.03.88**

(21) Numéro de dépôt : **85401763.9**

(22) Date de dépôt : **11.09.85**

(51) Int. Cl.⁴ : **F 16 H 39/02**

(54) **Circuit d'alimentation en fluide sous pression de deux organes récepteurs.**

(30) Priorité : **13.09.84 FR 8414058**

(43) Date de publication de la demande :
**02.04.86 Bulletin 86/14**

(45) Mention de la délivrance du brevet :
**23.03.88 Bulletin 88/12**

(84) Etats contractants désignés :
**DE GB IT**

(56) Documents cités :
**EP-A- 0 084 800**
**DE-C- 966 158**
**FR-A- 2 437 512**

(73) Titulaire : **POCLAIN HYDRAULICS Société Anonyme**
**de droit français**
**Boîte Postale no 12**
**F-60410 Verberie (FR)**

(72) Inventeur : **Fontaine, Jacques Pierre**
**33, rue du Port**
**F-60410 - Verberie (FR)**

(74) Mandataire : **Hoisnard, Jean-Claude et al**
**Cabinet Beau de Lomenie 55, rue d'Amsterdam**
**F-75008 Paris (FR)**

Jouve, 18, rue St-Denis, 75001 Paris, France

## Description

DE-A-966 158 décrit un circuit d'alimentation en fluide sous pression tel que défini par le préambule de la revendication 1.

L'invention propose un perfectionnement à un tel circuit permettant de laisser disponible pour l'alimentation d'un des récepteurs l'énergie non absorbée par l'autre, et ce, de manière simple.

A cet effet, dans le circuit proposé, a) l'arbre de sortie du deuxième moteur rotatif est attelé en rotation à celui du premier moteur rotatif, et, b) le raccord d'échappement du deuxième moteur rotatif est relié au deuxième organe récepteur.

De manière préférée, les premier et deuxième moteurs rotatifs sont constitués par les deux moteurs fictifs, constituants à chaque instant d'un moteur unique à au moins deux cylindrées distinctes, les arbres de sortie de ces premier et deuxième moteurs rotatifs étant constitués par l'arbre unique de sortie dudit moteur à au moins deux cylindrées distinctes.

L'avantage principal que l'on obtient avec un circuit conforme à l'invention réside effectivement dans la récupération sur l'arbre de sortie du premier moteur de l'énergie non absorbée par le deuxième organe récepteur, ceci, du simple fait de la solidarisation des arbres de sortie des deux moteurs.

Lorsqu'on choisit la réalisation utilisant un moteur unique à deux cylindrées, qui existe déjà, la simplicité de la solution est certaine.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés dans lesquels :

- la figure 1 est le schéma d'un circuit conforme à l'invention ; et,
- la figure 2 est le schéma de réalisation d'un moteur unique à deux cylindrées utilisable dans le circuit de la figure 1.

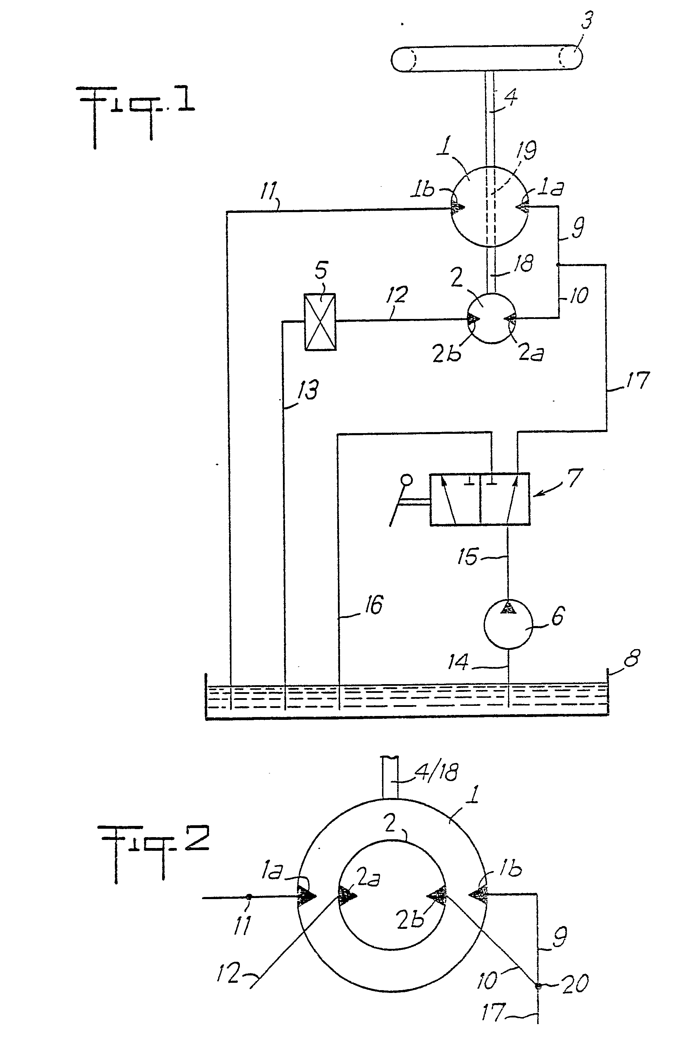

Le circuit représenté sur la figure 1 est constitué par :

- un premier moteur hydraulique rotatif 1, de type réversible, muni de deux raccords principaux 1a et 1b susceptibles de constituer, l'un (1a ou 1b), le raccord d'alimentation en fluide sous pression, l'autre (1b ou 1a), le raccord d'échappement du fluide hors du moteur ;

- un deuxième moteur hydraulique rotatif 2, de type réversible, muni de deux raccords principaux 2a et 2b susceptibles de constituer, l'un (2a ou 2b), le raccord d'alimentation en fluide sous pression, l'autre (2b ou 2a), le raccord d'échappement du fluide hors du moteur ;

- une roue 3 d'un véhicule, attelée à l'arbre de sortie 4 du premier moteur 1 ;

- un récepteur 5 utilisateur de fluide sous pression, constitué par exemple par le moteur hydraulique d'entraînement d'une chaîne à godets montée sur le véhicule muni de la roue 3 et destinée à détacher des vignes les grappes de raisins mûrs ;

- une pompe à fluide 6 ;

- un distributeur de fluide sous pression 7, à deux positions ;

- un réservoir de fluide 8 ; et,

- des conduits de liaisons, qui vont être définis, ci-après.

Il s'agit :

- des conduits 9 et 10 reliant les deux raccords principaux 1a et 2a ;

- du conduit d'échappement de fluide 11 reliant le raccord 1b au réservoir 8 ;

- du conduit 12 reliant le raccord principal 2b à l'admission du fluide dans le récepteur 5 ;

- du conduit d'échappement de fluide 13 reliant l'échappement du fluide hors du récepteur 5 au réservoir 8 ;

- des conduits d'aspiration 14 et de refoulement 15 de la pompe 6, reliant cette pompe au réservoir 8 et au distributeur 7 respectivement,

- des conduits 16 et 17, qui relient le distributeur 7 au réservoir 8, et, aux conduits 9 et 10, respectivement.

Les particularités suivantes doivent être notées :

- l'arbre de sortie 18 du moteur 2 est attelé en rotation (19) à l'arbre de sortie du moteur 1, de manière que le rapport des vitesses de rotation de ces deux arbres soit constant, égal à 1 par exemple ;

- les moteurs 1 et 2 sont, chacun, de type volumétrique et ont des cylindrées constantes, qui ont entre elles un rapport constant ;

- l'ensemble des deux moteurs 1 et 2 peut, avec avantage être réalisé selon le schéma de la figure 2.

Selon cette réalisation de la figure 2, l'ensemble des deux moteurs est constitué par un moteur unique à deux cylindrées, ayant un arbre de sortie unique et ayant un raccord externe d'admission 20 également unique. Dans ce moteur, les conduits 9 et 10 sont internes audit moteur.

Les deux positions du distributeur 7 correspondent :

- la première position, à la mise en communication des conduits 15 et 17, et, à l'obturation du conduit 16 ; et,

- la deuxième position, à la mise en communication des conduits 15 et 16, et, à l'obturation du conduit 17.

Le fonctionnement du circuit représenté va être exposé, le distributeur 17 étant placé dans sa première position.

Le fluide sous pression refoulé par la pompe 6 parvient aux raccords principaux 1a et 2a et entraîne en rotation les arbres 4 et 18. Ainsi, la roue 3 est entraînée en rotation avec un couple d'entraînement qui dépend évidemment de la pression dans les conduits 9 et 10, et, par conséquent aussi, de la contrepression dans le conduit 12. Car, en effet, le fluide qui traverse le moteur 2 entre les raccords d'admission 2a et d'échappement 2b, alimente le récepteur 5.

Lorsque ce récepteur 5 doit être alimenté en fluide à pression élevée, la pression dans le conduit 12 est élevée, et le moteur 2, dont les pressions d'admission et d'échappement ont alors des valeurs voisines, ne participe à l'entraînement de la roue 3 qu'avec un couple faible ou nul.

Au contraire, lorsque le récepteur 5 peut être alimenté avec un fluide à pression faible ou nulle, ou n'être pas alimenté du tout, le fluide du conduit 12 faisant alors retour direct au réservoir 8 par l'intermédiaire d'un dispositif de distribution connu (non représenté), la différence des pressions régnant dans les raccords 2a et 2b du moteur 2 peut être grande. Dans ce cas, le moteur 2 peut effectivement développer un couple moteur important, qui, repris par l'arbre 4, s'ajoute au couple moteur développé par le moteur 1. De cette manière, la puissance non absorbée par le récepteur 5 n'est pas perdue, mais est au contraire récupérée pour entraîner la roue 3.

Du fait de l'attelage en rotation des arbres 4 et 18, d'ailleurs souvent constitués par l'arbre unique d'un moteur à deux cylindrées (figure 2), et du type volumétrique des moteurs 1 et 2, l'ensemble de ces deux moteurs possède un effet de division du débit d'alimentation véhiculé dans le conduit 17, ce qui, en évitant l'écoulement de la totalité du fluide vers le récepteur 5 fonctionnant, dans cette hypothèse, à pression faible ou nulle,

- évite l'emballement de ce récepteur 5,
- évite la diminution, voire l'annulation de la vitesse d'entraînement de la roue 3, et,
- permet en outre le report du couple développé par le moteur 2, vers l'arbre 4 d'entraînement de la roue 3.

## Revendications

1. Circuit d'alimentation en fluide sous pression d'au moins deux organes récepteurs (1 et 5), comprenant :
- un premier desdits organes récepteurs, constitué par un premier moteur rotatif (1), dont l'arbre de sortie (4) est susceptible d'être attelé à un organe (3) à entraîner,
- un deuxième organe récepteur (5),
- un deuxième moteur rotatif (2), distinct du deuxième organe récepteur (5) et ayant un arbre de sortie (18), et,
- une source de fluide sous pression (6) munie d'un raccord de refoulement (15),

lesdits premier (1) et deuxième (2) moteurs rotatifs étant, chacun, de types volumétriques et munis d'un raccord d'admission (1a, 2a) et d'un raccord d'échappement (1b, 2b) de fluide, et, les raccords d'admission (1a, 2a) des premier et deuxième moteurs rotatifs étant susceptibles (7) d'être reliés en parallèle au raccord de refoulement (15) de la source de fluide sous pression (6), caractérisé en ce que

a) l'arbre de sortie (18) du deuxième moteur rotatif (2) est attelé en rotation à celui (4) du premier moteur rotatif (1) ; et,

b) le raccord d'échappement (2b) du deuxième moteur rotatif (2) est relié (12) au deuxième organe récepteur (5).

2. Circuit d'alimentation selon la revendication 1, caractérisé en ce que les premier (1) et deuxième (2) moteurs rotatifs sont constitués par les deux moteurs fictifs, constituants à chaque instant d'un moteur unique à au moins deux cylindrées distinctes (figure 2), les arbres de sortie de ces premier et deuxième moteurs rotatifs étant constitués par l'arbre unique de sortie (4/18) dudit moteur à au moins deux cylindrées distinctes.

## Claims

1. Pressure-fluid feed circuit for at least two receptors (1 and 5) comprising :
- A first receptor comprising a first rotary motor (1) whose output shaft (4) is adapted to be connected to a member (3) which it is required to drive,
- A second receptor (5),
- A second rotary motor (2), separate from the second receptor (5) and having an output shaft (18), and
- A source of pressure fluid (6) provided with a delivery connection (15),

said first rotary motor (1) and second rotary motor (2) each being of the volumetric type and provided with a fluid intake connection (1a, 2a) and a fluid discharge connection (1b, 2b), and the intake connections (1a, 2a) of the first and second rotary motors being adapted (7) to be connected in parallel to the delivery connection (15) for the pressure fluid source (6), characterised in that

(a) the output shaft (18) of the second rotary motor (2) is connected for rotation to that (4) of the first rotary motor (1) ; and

(b) the discharge connection (2b) of the second rotary motor (2) is connected (12) to the second receptor (5).

2. A feed circuit according to claim 1, characterised in that the first rotary motor (1) and second rotary motor (2) comprise the two dummy motors which at any time are part of a single motor comprising at least two separate cubic capacities (Fig. 2), the output shafts of said first and second rotary motors comprising the single output shaft (4/18) of said motor having at least two separate cubic capacities.

## Patentansprüche

1. Druckfluid-Speisekreis für mindestens zwei Empfangsysteme (1 und 5) umfassend :
- ein erstes Empfangsystem, bestehend aus einem ersten Umlaufmotor (1), dessen Abtriebswelle (4) an ein anzutreibendes Organ (3) ankuppelbar ist,
  - ein zweites Empfangsystem (5),
  - einen zweiten Umlaufmotor (2), der vom zweiten Empfangsystem (5) getrennt ist und eine Abtriebswelle (15) besitzt, und
  - eine mit einer Druckleitung (15) versehene Druckfluidquelle (6),

wobei der erste (1) und der zweite (2) Umlaufmotor jeweils des volumetrischen Typs und mit einer Zuführleitung (1a, 2a) und . einer Auslaßleitung (1b, 2b) für Fluid versehen sind, und die Zuführleitungen (1a, 2a) des ersten und zweiten Umlaufmotors mit der Druckleitung (15) der Druckfluidquelle (6) parallelschaltbar (7) sind, dadurch gekennzeichnet, daß

a) die Abtriebswelle (18) des zweiten Umlaufmotors (2) an jene (4) des ersten Umlaufmotors (1) rotationsgekuppelt ist, und

b) die Auslaßleitung (2b) des zweiten Umlaufmotors (2) an das zweite Empfangsystem (5) angeschlossen ist.

2. Speisekreis nach Anspruch 1, dadurch gekennzeichnet, daß der erste (1) und der zweite (2) Umlaufmotor durch zwei fiktive Motoren gebildet sind, die ständig Bestandteil eines einzigen Motors mit mindestens zwei getrennten Hubräumen sind (Fig. 2), wobei die Abtriebswellen dieses ersten und zweiten Umlaufmotors durch die einzige Abtriebswelle (4/18) des Motors mit mindestens zwei getrennten Hubräumen gebildet sind.

Fig.1

Fig.2